(19) **Europäisches Patentamt**

**European Patent Office**

**Office européen des brevets**

(11) Veröffentlichungsnummer: **0 009 597**
**B1**

(12) # EUROPÄISCHE PATENTSCHRIFT

(45) Veröffentlichungstag der Patentschrift:
27.01.82

(21) Anmeldenummer: **79103072.9**

(22) Anmeldetag: **21.08.79**

(51) Int. Cl.³: **G 01 P 13/00, G 01 P 3/48**

(54) Detektor zum Überwachen der gleichförmigen Bewegung von rotierenden Gegenständen.

(30) Priorität: **02.10.78 DE 2842887**

(43) Veröffentlichungstag der Anmeldung:
**16.04.80 Patentblatt 80/8**

(45) Bekanntmachung des Hinweises auf die Patenterteilung:
**27.01.82 Patentblatt 82/4**

(84) Benannte Vertragsstaaten:
**AT BE CH FR GB IT NL**

(56) Entgegenhaltungen:
**DE-A-1 948 906**
**DE-A-2 552 738**
**US-A-4 086 519**
**SIEMENS-ZEITSCHRIFT, Band 44, 1970 (Heft 5),**
**Seiten 309—313 Erlangen**
**H. LOBL et al.: »Kaltleiter-Strömungs-**
**messer hoher Empfindlichkeit«, Seite 309**
**IBM TECHNICAL DISCLOSURE BULLETIN,**
**Vol. 17, Nr. 2, Juli 1974, Seiten 357, 358**
**New York, U.S.A.**
**L.D. RICHARDS et al.:**
**»Digital Optical Techometer«**
**Seite 357, 358**

(73) Patentinhaber: **SIEMENS AKTIENGESELLSCHAFT Berlin und München, Postfach 22 02 61, D-8000 München 22 (DE)**

(72) Erfinder: **Voigt, Ulrich, Dipl.-Ing., Unertlstrasse 31, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Detektor zum Überwachen der gleichförmigen Bewegung von rotierenden Gegenständen

Die Erfindung bezieht sich auf einen Detektor zum Überwachen der gleichförmigen Bewegung von rotierenden Gegenständen mit Hilfe gegenüber diesen feststehenden Indikatoren, die auf den zu überwachenden Gegenständen in regelmäßigen Abständen angeordnete Signalgeberelemente abtasten und daraus jeweils einen Abtastimpuls ableiten, bei dem der Rotornabe benachbart in einer dazu senkrechten Ebene mit dem feststehenden Gehäuse des rotierenden Gegenstandes starr verbunden ein Steg angeordnet ist, der ein Detektorelement trägt.

Oft ist die Geschwindigkeit von rotierenden Gegenständen, die normalerweise im wesentlichen gleichförmig bewegt werden, daraufhin zu überwachen, daß bestimmte Grenzwerte nicht über- oder unterschritten werden. Wird ein Grenzwert nicht eingehalten, so ist dieser fehlerhafte Betriebszustand anzuzeigen. Die Anzeige ermöglicht eine Korrektur oder erlaubt, entsprechende Maßnahmen zu treffen, die weitere Folgeerscheinungen dieses Fehlers verhindern. Ein spezieller Anwendungsfall kann z. B. die Überwachung der Drehzahl von Lüfteraggregaten sein, die zum Kühlen von größeren elektrischen Anlagen eingesetzt werden, weil eine Vielzahl dicht gepackter, elektronischer Bauelemente in ihrer Masse eine derart hohe Verlustwärme erzeugt, daß sie durch reine Konvektion von Luft als Kühlmittel nicht abgeführt werden kann. Wenn dann eines dieser Lüfteraggregate ausfällt oder auch nur mit verminderter Drehzahl arbeitet, kann dies zu einer übermäßigen Erwärmung der elektronischen Baugruppen führen, deren Funktion dadurch teilweise oder sogar gänzlich gestört wird.

Aus »Siemens-Zeitschrift« 44 (1970), Heft 5, Seite 309 ff., ist es bekannt, den einwandfreien Betriebszustand solcher Lüfteraggregate mit Kaltleiter-Strömungsmessern hoher Empfindlichkeit zu überwachen. Im Prinzip wird dabei eine definierte Wärmequelle durch die von einem einwandfrei arbeitenden Lüfteraggregat erzeugte Luftströmung abgekühlt. Je nachdem, ob man die Temperatur oder die Leistungsaufnahme der Wärmequelle konstant hält, ist die aufgenommene elektrische Energie oder die Temperatur der Wärmequelle ein Maß für die Strömung. Eine solche Überwachungsmethode ist bezüglich der Überwachung der einwandfreien Funktion des Lüfteraggregats etwas kritisch, da der Kühlluftstrom selbst auch bei einwandfreier Funktion des Lüfteraggregats, abhängig von den Betriebsbedingungen der elektrischen Anlage und auch wechselnden Umgebungsbedingungen, unterschiedliche Temperaturen aufweisen kann. Dies wiederum kann zu mangelhaften Anzeigen über einen angeblich fehlerhaften Betriebszustand führen.

Ähnliches gilt auch für Bi-Metall-Fühler, die für diesen Zweck häufiger eingesetzt werden. Diese funktionieren jedoch nur dann zufriedenstellend, wenn die Lüfteraggregate im Nenndrehzahlbereich laufen. Falls ein Aggregat durch Unterbrechung des Motorstromkreises, Ausbleiben der Netzspannung oder durch Lagerschaden stehen bleibt bzw. durch einen beginnenden Lagerschaden in seiner Drehzahl bzw. Förderleistung stark abfällt, ist in vielen, besonders kleinen und gedrängt aufgebauten Lüfteraggregaten die Luftströmung durch Eigenkonvektion so stark abgesunken, daß diese Fühler überhaupt nicht oder viel zu spät ansprechen.

Für größere Lüfteraggregate, die vielfach als Axiallüfter ausgebildet sind, ist es weiterhin bekannt, auf die rotierende Rotornabe des Lüfteraggregats unmittelbar einen kleinen Tachogenerator aufzusetzen und so unmittelbar die Drehzahl des Lüfteraggregats selbst zu überwachen. Eine solche Lösung ist z. B. in der DE-OS 1 948 906 beschrieben. Diese direkte Überwachung des Funktionszustandes, d. h. der Drehzahl eines Lüfteraggregats, ist aber zusammen mit der notwendigen Auswerteschaltung für kleine Lüfteraggregate teuer und läßt sich insbesondere in solche Lüftertypen aus konstruktiven Gründen wegen zu großer Abmessungen nicht einbauen.

Darüber hinaus ist es bekannt, die Translations- oder Rotationsbewegung von Gegenständen mit Hilfe von optischen oder induktiven Indikatoren zu überwachen. Diese tasten berührungslos auf den Gegenständen in regelmäßigen Abständen angeordnete Signalgeberelemente ab. Bei diesen Elementen kann es sich um Farbmarkierungen, aber auch um Schlitze und Kerben auf den bewegten Gegenständen handeln. Ein spezieller derartiger induktiver Detektor ist aus der DE-AS 1 001 496 bekannt. Hier soll die rotatorische Bewegung eines Meßwerks ausgewertet werden; dazu tritt eine von dem Meßwerkzeiger getragene Metallfahne zwischen die beiden Spulen eines Oszillators. Dadurch werden infolge der Feldverdrängung die beiden Spulen entkoppelt und gedämpft, so daß sich die Oszillatorspannung verringert bzw. die Schwingung ganz abreißt oder die Frequenz verändert wird. Diese Veränderung der Oszillatorspannung kann dazu benutzt werden, Fehlermeldeeinrichtungen zu betätigen, die ein Warnsignal abgeben. Man könnte einen derart aufgebauten Indikator in entsprechend abgewandelter Form auch dazu verwenden, die Geschwindigkeit von im wesentlichen gleichförmig rotatorisch bewegten Gegenständen zu überwachen. Diese wäre aber ebenfalls unzweckmäßig, weil derartige Indikatoren für diesen Anwendungsfall aufwendig sind und eine konstruktive Anpassung eines Lüfteraggregats an diesen Detektor erforderte.

In der US-Patentschrift 4 086 519 ist eine Anordnung, die sich zur Drehzahlmessung eignet, beschrieben. Auf einem umlaufenden Rotorteil sind abwechselnd Dauermagnete unterschiedlicher Polarität angebracht, während an einem feststehenden Teil ein Detektor in Form eines Hallelementes befestigt ist. Durch die wechselnde Polarität der Dauermagnete wird im Hallelement eine Spannung unterschiedlicher Polarität erzeugt, deren Frequenz ein Maß für die Umlaufgeschwindigkeit darstellt. Dabei zeigt Fig. 10 eine Nabe 62 und dieser benachbart in einer dazu senkrechten Ebene einen mit dem feststehenden Gehäuse 8 starr verbundenen Steg 77. Dieser Steg 77 trägt ein Detektorelement 72.

Da sich die Signalgeber am Umfang eines Rotors befinden ist diese Ausführung, z. B. für Elektromotoren, deren Rotoren elektrische Wicklungen tragen, nicht geeignet.

Der Erfindung liegt daher die Aufgabe zugrunde, einen Detektor zum Überwachen der gleichförmigen Bewegung von rotierenden Gegenständen der eingangs genannten Art zu schaffen, der eine direkte Funktionsüberwachung der Drehbewegung gestattet, ohne daß ein handelsübliches Lüfteraggregat zur Lösung dieser Überwachungsaufgabe konstruktiv verändert werden muß. Der Detektor muß also so ausgebildet sein, daß er als Anbaueinheit bei kleinen konstruktiven Abmessungen ohne weiteres eingesetzt werden kann, dabei aufwandsarm, d. h. billig in der Herstellung und konstruktiv so ausgebildet ist, daß er ohne weiteres an unterschiedliche Gerätetypen anpaßbar ist.

Diese Aufgabe wird bei einem Detektor der eingangs genannten Art erfindungsgemäß dadurch gelöst, daß die Signalgeberelemente in an sich fertigungstechnisch bedingten Ausnehmungen auf dem Umfang der Stirnseite der Nabe des rotierenden Gegenstandes festgelegt sind, daß der Steg als Träger für eine Leiterplatte dient, daß sich das Detektorelement auf der der Rotornabe zugekehrten Seite der Leiterplatte befindet und daß die Leiterplatte außerdem die mit dem Detektorelement verbundenen Elemente einer elektrischen Auswerteschaltung trägt.

Diese Lösung geht davon aus, daß z. B. Lüfternaben häufig in einem Druckgußverfahren hergestellt werden und deshalb auf dem Nabenstummel in regelmäßigen Abständen angeordnete Ausnehmungen aufweisen, die zum Auswerfen des Gußteils aus der Druckgußform dienen. Diese häufig als Sacklöcher ausgebildeten Ausnehmungen können nun dazu verwendet werden, die Signalgeberelemente selbst, beispielsweise kleine Permanentmagnete oder Halterungen für Signalgeberelemente aufzunehmen. Mehrere solcher Signalgeberelemente können dann symmetrisch zueinander angeordnet werden, so daß sich dadurch auch keine größeren Unwuchten ergeben, Toleranzen also beim Auswuchten eines Lüfterrades, das an sich auch sonst notwendig ist, ausgeglichen werden können. Diese Lösung beruht also auf einer direkten Erfassung der Grundfunktion eines rotierenden Gegenstandes und läßt auch die Verwendung von beispielsweise von handelsüblichen bzw. listenmäßigen Lüfteraggregaten zu, die mit oder ohne eine solche Anbaueinheit ihre Grundfunktion liefern können. Dabei ist es gleichgültig, ob es sich um Lüfteraggregate nach dem Axial-, Radial- oder Tangentialprinzip handelt.

Eine besonders vorteilhafte Weiterbildung der Erfindung besteht darin, daß der an zwei diagonal einander gegenüberliegenden Ecken des feststehenden Gehäuses des rotierenden Gegenstandes aufrecht stehend festgelegte Steg über der Achse der Rotornabe Z-förmig abgewinkelt ist und im Bereich der Leiterplatte mehrere Stifte aufweist, die zum Festlegen der Leiterplatte in mit Lötaugen ausgestattete Durchgangsbohrungen der Leiterplatte eingelötet sind. Diese Lösung stellt eine besonders einfache und fertigungstechnisch vorteilhafte Verbindung zwischen der Leiterplatte und dem Steg als tragendem Element dar und ermöglicht ein einfaches Ausrichten der Leiterplatte in einer zu der Achse des rotierenden Gegenstandes senkrechten Ebene, wobei die Z-förmige Biegung des Steges in der Mitte der Leiterplatte deren Kippen aus der festgelegten Ebene verhindert.

Diese konstruktive Ausgestaltung des Detektors ermöglicht, wie aus weiteren vorteilhaften Ausgestaltungen der Erfindung, die in weiteren Unteransprüchen beschrieben sind, hervorgeht, das Detektorelement in freizügiger Weise auf der Unterseite der Leiterplatte anzuordnen und auch den Steg mit geringen Änderungen konstruktiv so auszubilden, daß die Anbaueinheit flexibel an unterschiedliche Gerätetypen der rotierenden Gegenstände, insbesondere von kleinen Lüfteraggregaten anpaßbar ist.

Im folgenden wird ein Ausführungsbeispiel der Erfindung anhand der Zeichnung näher erläutert. Dabei zeigen

Fig. 1, Fig. 2 zwei Ansichten eines Lüfteraggregates mit einem erfindungsgemäß ausgebildeten angebauten Detektor zum Überwachen der gleichförmigen Bewegung des Lüfteraggregats,

Fig. 3 einen Schnitt längs der Schnittlinie III . . . III durch dieses Lüfteraggregat gemäß der Darstellung von Fig. 1 und

Fig. 4 ein Blockschaltbild als Beispiel für eine Auswerteschaltung des Detektors.

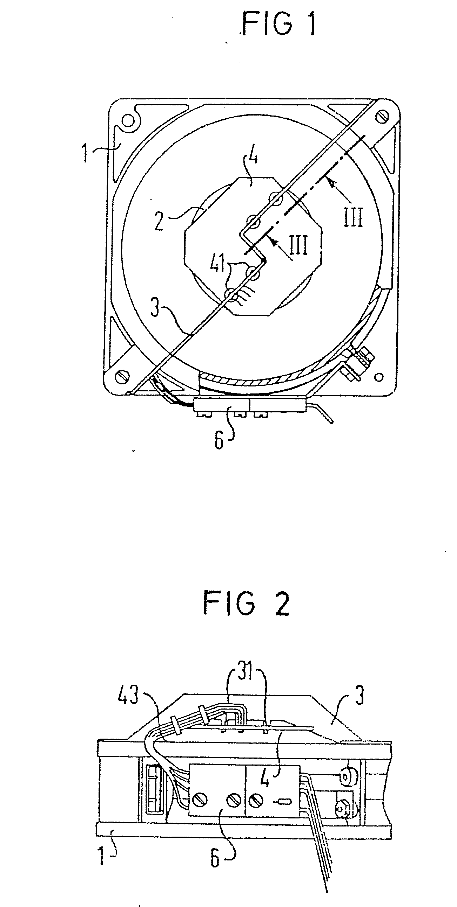

In Fig. 1 und 2 sind eine Drauf- bzw. eine Seitenansicht eines handelsüblichen Lüfteraggregats, hier eines Axiallüfters, dargestellt. Die beiden Ansichten zeigen ein feststehendes Lüftergehäuse 1, in der Draufsicht der Fig. 1 ist zudem eine Rotornabe 2 des Lüfteraggregats teilweise angedeutet. In einer zu der Achse dieser Rotornabe 2 senkrechten Ebene ist ein Steg 3 in einer der beiden Diagonalen des Lüftergehäuses 1 angeordnet und mit diesem fest verschraubt. Dieser aufrecht stehende Steg 3 ist im Bereich der Rotornabe 2 Z-förmig abgewinkelt und dient als Träger für eine Leiterplatte 4, die an seiner Unterseite, dem Nabenende benachbart, in einer zur Achsenrichtung der Rotornabe 2 senkrechten Ebene liegt.

Wie aus Fig. 2 zu erkennen ist, weist der Steg 3 an seiner Unterseite, der Leiterplatte 4 zugekehrt, mehrere Stifte 31 auf, die in mit Lötaugen besetzte Durchgangsbohrungen 41 der Leiterplatte 4 eingreifen. Die Enden der Stifte 31 des Steges 3 werden in diese Durchgangsbohrungen 41 der Leiterplatte 4 eingelötet und stellen so die starre Verbindung zwischen dem tragenden Steg 3 und der Leiterplatte 4 dar.

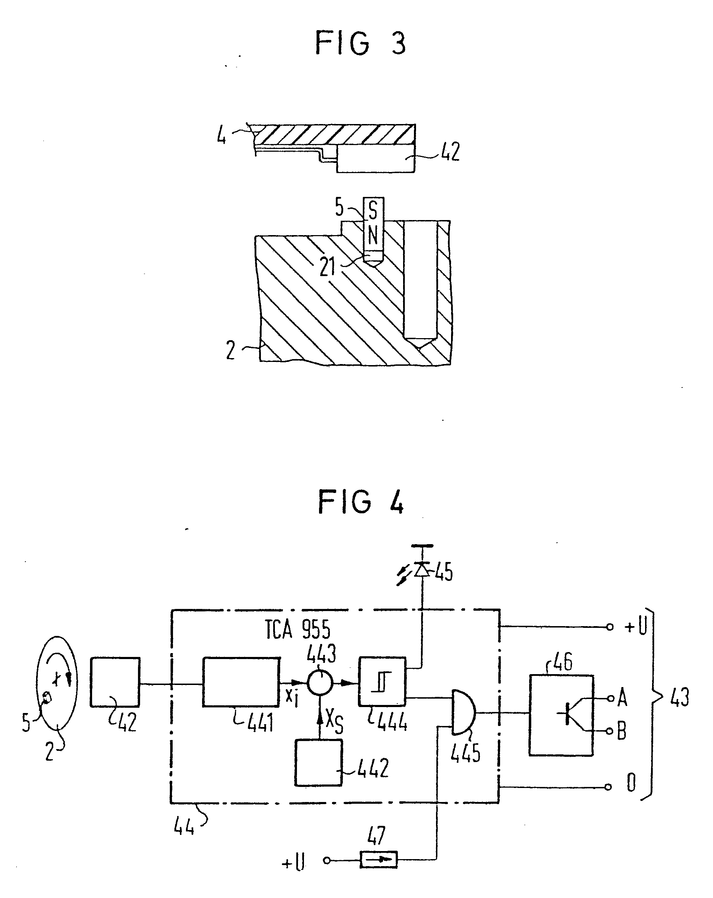

In Fig. 3 ist eine Ansicht des Lüfteraggregats längs der Schnittlinie III...III von Fig. 1 dargestellt. Daraus geht hervor, daß die Leiterplatte 4 dem Wellenende der Rotornabe 2 dicht benachbart und parallel zu diesem angeordnet ist. Die Rotornabe 2 weist handelsüblich auf ihrem Umfang in regelmäßigen Abständen verteilt Sacklochbohrungen 21 auf, die herstellungstechnisch bedingt sind. Die Rotoren dieser kleinen Lüfteraggregate werden nämlich vielfach als Druckgußteile hergestellt, dabei dienen die Sacklochbohrungen 21 zum Aufnehmen von Auswerfern beim Herausheben eines fertig gegossenen Rotorteils aus der Druckgußform. Im vorliegenden Fall werden diese deshalb bei serienmäßigen Lüfteraggregaten bereits vorhandenen Ausnehmungen am Wellenende der Rotornabe 2 benutzt, um Signalgeberelemente aufzunehmen bzw. auf der Rotornabe festzulegen. Im vorliegenden Ausführungsbeispiel ist in der Sacklochbohrung 21 ein kleiner Permanentmagnet 5 als Signalgeberelement eingesetzt, der mit seinem Südpol S in Richtung der Leiterplatte 4 weist. Auf der Unterseite dieser Leiterplatte 4 ist ein Detektorelement dem Permanentmagneten 5 dicht benachbart angeordnet. Dieses ist in diesem Fall als Hallgenerator 42 ausgebildet.

Die über der Rotornabe 2 angeordnete Leiterplatte 4 trägt im übrigen auch alle hier nicht mehr dargestellten elektrischen Bauteile einer Auswerteschaltung zum Bewerten der von dem Hallgenerator 42 abgegebenen Signalimpulse.

Besonders in Fig. 2 ist deutlich zu erkennen, daß elektrische Anschlußleitungen 43 an die Leiterplatte, die hier als Bandkabel ausgeführt sind, am Steg 3 befestigt zu einer Steckverbindung 6 geführt sind, die an einer Schmalseite des Lüftergehäuses festgelegt ist.

Diese konstruktive Ausbildung des Detektors als Anbaueinheit an ein listenmäßiges Lüfteraggregat erlaubt eine sehr geringe Bauhöhe, eignet sich deshalb insbesondere für kleine Aggregattypen und ist flexibel an unterschiedliche Anwendungsfälle, auch unterschiedliche Überwachungsmethoden anpaßbar. So könnte z. B. die Leiterplatte 4 auch eine kleine, der Rotornabe 2 zugekehrte Lichtquelle tragen, deren Licht von in die Sacklochbohrungen 21 der Rotornabe 2 eingesetzten reflektierenden Flächen auf ein als fotoelektrischer Wandler ausgebildetes Detektorelement gerichtet wird. Es wären aber auch andere induktive Auswertemethoden z. B. mit einer Feldplatte als Detektorelement denkbar. Die einfache Verbindung des Steges 3 mit der Leiterplatte 4, wobei der Z-förmig abgewinkelte Steg 3 ein Kippen der Leiterplatte 4 aus der zur Achsenrichtung der Rotornabe 2 senkrechten Ebene verhindert, erlaubt eine einfache Anpassung der Anbaueinheit an unterschiedliche Anwendungsfälle bzw. Lüfteraggregate mit unterschiedlichen Abmessungen. Denn in einem solchen Fall muß lediglich die Länge des Steges 3 mit seinen Aufnahmelöchern für die Schraubverbindung mit dem Lüftergehäuse 1 angepaßt werden.

In Fig. 4 ist noch in einem Blockschaltbild ein Beispiel für eine mögliche Ausführungsform einer Auswerteschaltung, die dem in Fig. 3 dargestellten Anwendungsfall entspricht, dargestellt. Schematisch ist die Rotornabe 2 angedeutet, die den Permanentmagneten 5 als Signalgeberelement trägt. Diesem zugeordnet ist als Detektorelement der Hallgenerator 42, an dessen Ausgang eine handelsübliche integrierte Schaltung 44 angeschlossen ist. Diese enthält einen Drehzahl-Gleichspannungswandler 441, dessen Ausgangssignal dem Istwert $x_i$ für die Drehzahl entspricht. Dieser wird ebenso wie ein Sollwert $x_s$, der von einem Sollwertgeber 442 abgegeben wird, einer Komparatorschaltung 443 zugeführt und in einer angeschlossenen Schwellwertschaltung 444 bewertet. Beim Ansprechen der Schwellwertschaltung 444 in einem Fehlerfall, d. h. einer nicht mehr in einem zulässigen Toleranzbereich liegenden Drehzahl des Lüfters wird mit einem Ausgangssignal der Schwellwertschaltung 444 eine als Lumineszenzdiode 45 ausgebildete Fehleranzeige gesetzt. Darüber hinaus wird das Ausgangssignal der Schwellwertschaltung 444 einem UND-Glied 445 zugeführt, dessen Ausgang an eine Serienendstufe 46 angeschlossen ist. Deren Ausgangssignale werden über die Anschlußleitungen 43 einer zentralen Auswerteeinheit zugeführt, wenn gleichzeitig eine Vielzahl von Lüfteraggregaten zu überwachen ist. Dabei ist es z. B. möglich, die Ausgänge der Serienendstufe 46 hintereinanderzuschalten und so bei Ausfall bzw. fehlerhaftem Betriebsverhalten nur eines der damit gemeinsam überwachten Lüfteraggregate ein zentrales Fehlermeldesignal zu erzeugen.

Die insoweit erläuterte Schaltung würde allerdings nach dem Einschalten während des Hochlaufens der Lüfteraggregate 40 zur Nenndrehzahl, eine Fehleranzeige setzen. Um dies zu verhindern, ist an das UND-Glied 445 ein Verzögerungsglied 47 angeschlossen, mit dem in diesem Betriebszustand das UND-Glied kurzzeitig gesperrt und damit die Ausgabe eines Fehlersignals verhindert wird.

Liste der Bezugszeichen

| | |
|---|---|
| 1 | Lüftergehäuse |
| 2 | Rotornabe |
| 21 | Sacklochbohrung |
| 3 | Steg |
| 31 | Stift |
| 4 | Leiterplatte |

| 41 | Durchgangsbohrung mit Lötauge |
| 42 | Hallgenerator (Detektorelement) |
| 43 | Anschlußleitung (Bandkabel) |
| 44 | integrierter Baustein der Auswert-schaltung |
| 441 | Drehzahlgleichspannungswandler |
| 442 | Sollwertgeber |
| 443 | Komparatorschaltung |
| 444 | Schwellwertschaltung |
| 445 | UND-Glied |
| 45 | Lumineszenzdiode (Anzeigeelement) |
| 46 | Serienendstufe |
| 47 | Totzeitglied |
| 5 | Hallgenerator (Signalgeberelement) |
| 6 | Steckverbinder |

## Patentansprüche

1. Detektor zum Überwachen der gleichförmigen Bewegung von rotierenden Gegenständen mit Hilfe gegenüber diesen feststehender Indikatoren, die auf den zu überwachenden Gegenständen in regelmäßigen Abständen angeordnete Signalgeberelemente abtasten und daraus jeweils einen Abtastimpuls ableiten, bei dem der Rotornabe benachbart in einer dazu senkrechten Ebene mit dem feststehenden Gehäuse des rotierenden Gegenstandes starr verbunden ein Steg angeordnet ist, der ein Detektorelement trägt, dadurch gekennzeichnet, daß die Signalgeberelemente (5) in an sich fertigungstechnisch bedingten Ausnehmungen (21) auf dem Umfang der Stirnseite der Nabe (2) des rotierenden Gegenstandes festgelegt sind, daß der Steg (3) als Träger für eine Leiterplatte (4) dient, daß sich das Detektorelement (42) auf der der Rotornabe (2) zugekehrten Seite der Leiterplatte (4) befindet und daß die Leiterplatte (4) außerdem die mit dem Detektorelement (42) verbundenen Elemente einer elektrischen Auswerteschaltung trägt.

2. Detektor nach Anspruch 1, dadurch gekennzeichnet, daß der an zwei diagonal einander gegenüberliegenden Ecken des Gehäuses (1) des rotierenden Gegenstandes aufrecht stehend festgelegte Steg (3) über der Achse der Rotornabe (2) Z-förmig abgewinkelt ist und im Bereich der Leiterplatte (4) mehrere Stifte (31) aufweist, die zum Festlegen der Leiterplatte in mit Lötaugen ausgestattete Durchgangsbohrungen (41) der Leiterplatte (4) eingelötet sind.

3. Detektor nach Anspruch 2, dadurch gekennzeichnet, daß der Steg (3) zudem als Träger für Leitungsverbindungen (43) der auf der Leiterplatte (4) angeordneten Auswerteschaltung mit einem am Gehäuse (1) des rotierenden Gegenstandes seitlich angeordneten Stecker für eine Steckverbindung (6) dient.

4. Detektor nach einem der Ansprüche 1 bis 3, dadurch gekennzeichnet, daß die Signalgeberelemente (5) als ferromagnetische Elemente und das Detektorelement (42) als induktiv wirksamer Indikator ausgebildet sind.

5. Detektor nach Anspruch 4, dadurch gekennzeichnet, daß als Detektorelement ein Hallgenerator (42) verwendet ist.

6. Detektor nach Anspruch 2 oder 3, dadurch gekennzeichnet, daß die Leiterplatte (4) eine Lichtquelle aufweist, die Signalgeberelemente optisch reflektierend und das Detektorelement als fotoelektrischer Wandler ausgebildet sind.

7. Detektor nach einem der Ansprüche 1 bis 6, dadurch gekennzeichnet, daß auf der Leiterplatte (4) eine Lumineszenzdiode (45) als Anzeigeelement für einen fehlerhaften Betriebszustand vorgesehen ist.

8. Detektor nach einem der Ansprüche 1 bis 7, dadurch gekennzeichnet, daß eine zentrale Anzeigeschaltung vorgesehen ist, an der Auswerteschaltungen einer Mehrzahl rotierender Gegenstände hintereinander angeschlossen sind.

9. Detektor nach einem der Ansprüche 1 bis 8, dadurch gekennzeichnet, daß die rotierenden Gegenstände als Lüfteraggregate ausgebildet sind, die zum Kühlen elektronischer Bausteine elektrischer Anlagen eingesetzt werden.

## Claims

1. A detector for monitoring the uniform motion of a rotating object with the aid of an indicator stationary relative to the rotating object to scan an aligned transmitting element on the object to be monitored and derive respective scanning pulses therefrom, wherein a cross-piece which carries a detector element rigidly connected to the stationary housing of the rotating object adjacent to the rotor hub in a plane vertical thereto, characterised in that each signal transmitting element (5) is fixed in a recess (21) which are conditional on production technology per se, at the periphery of the end face of the hub (2) of the rotating object, the cross-piece (3) serving as a carrier for a circuit board (4), the detector element (42) being arranged on the side of the circuit board (4) which faces towards the rotor hub (2), and the circuit board (4) carrying elements of an electrical evaluation circuit which are connected to the detector element (42).

2. A detector as claimed in claim 1, characterised in that the cross-piece (3) is fixed on two diagonally opposed corners of the housing (1) of the rotating object in an upright fashion, formed over the axis of the rotor hub (2) to be Z-shaped, and having a plurality of pins (31) which are equipped with soldering lugs in the region of the circuit board (4), and are soldered into through-holes (41) of the circuit board (4) in order to fix the circuit board.

3. A detector as claimed in claim 2, characterised in that the cross-piece (3) serves as a carrier for line connections (43) of the evaluation circuit arranged on the circuit board (4), comprising a plug laterally arranged on the housing (1) of the rotating object for a plug-and-socket connection (6).

4. A detector as claimed in one of the claims 1 to 3, characterised in that each signal transmitting element (5) is designed as a ferro-magnetic element and the detector element (42) is designed as an inductively controlled indicator.

5. A detector as claimed in claim 4, characterised in that each detector element is a Hall generator (42).

6. A detector as claimed in claim 2 or 3, characterised in that the circuit board (4) possesses a light source to optically reflect signal transmitting elements and the detector element is a photo-electric converter.

7. A detector as claimed in one of the claims 1 to 6, characterised in that a luminescence diode (45) is arranged on the circuit board (4) as indicating element for a faulty operating state.

8. A detector as claimed in one of the claims 1 to 7, characterised in that a central indication circuit is provided to which evaluation circuits of a plurality of rotating objects are successively connected.

9. A detector as claimed in one of the claims 1 to 8, characterised in that the rotating objects are designed as fan units for cooling electronic modules of electrical systems.

**Revendications**

1. Détecteur pour contrôler le mouvement uniforme d'objets entraînés en rotation à l'aide d'indicateurs fixes par rapport auxdits objets et détectant des éléments générateurs de signaux disposés à des distances régulières sur les objets à contrôler et en dérivant respectivement des impulsions de détection, du type dans lequel il est prévu près du moyeu du rotor et dans un plan perpendiculaire à ce dernier, une barrette reliée rigidement à l'enveloppe fixe de l'objet entraîné en rotation et portant un élément détecteur, caractérisé par le fait que les éléments générateurs de signaux (5) sont fixés dans des ouvertures (21) provenant de la technique de fabrication mise en oeuvre, sur la périphérie de la face frontale du moyeu (2) de l'objet entraîné en rotation, que la barrette (3) sert de support à une plaque à circuit imprimé (4), que l'élément détecteur (42) se trouve sur le côté de ladite plaque (4) voisin du moyeu du rotor (2), et que la plaque (4) porte en outre les éléments d'un circuit électrique d'évaluation, qui sont reliés à l'élément détecteur (42).

2. Détecteur selon la revendication 1, caractérisé par le fait que la barrette (3) fixée sur chant au niveau de deux sommets diagonalement opposés de l'enveloppe de l'objet entraîné en rotation, est coudée en Z au-dessus de l'axe du moyeu (2) du rotor et comporte au niveau de la plaque à circuit imprimé (4) plusieurs chevilles (31) qui, pour fixer ladite plaque, sont soudées dans des perçages (41) de cette dernière, pourvus d'oeillets de soudage.

3. Détecteur selon la revendication 2, caractérisé par le fait que la barrette (3) sert à une liaison par enfichage (6) pour une fiche disposée latéralement sur l'enveloppe (1) de l'objet entraîné en rotation et servant de support pour les liaisons (43) des conducteurs du dispositif d'évaluation disposé sur la plaque (4) à circuit imprimé.

4. Détecteur selon l'une des revendications 1 à 3, caractérisé par le fait que les éléments générateurs de signaux (5) sont constitués par des éléments ferromagnétiques et que l'élément détecteur (42) est réalisé sous la forme d'un indicateur à action inductive.

5. Détecteur selon la revendication 4, caractérisé par le fait que l'élément détecteur est un générateur de Hall.

6. Détecteur selon la revendication 2 ou 3, caractérisé par le fait que la plaque à circuits imprimés (4) comporte une source lumineuse, que les éléments générateurs de signaux sont optiquement réfléchissants et que l'élément détecteur est un convertisseur photoélectrique.

7. Détecteur selon l'une des revendications 1 à 6, caractérisé par le fait qu'il est prévu sur la plaque à circuit imprimé (4) une diode luminescente (45) constituant un élément de signalisation pour un état de fonctionnement défectueux.

8. Détecteur selon l'une des revendications 1 à 7, caractérisé par le fait qu'il est prévu un circuit central de signalisation auquel sont reliés successivement des circuits d'évaluation d'une pluralité d'objets entraînés en rotation.

9. Détecteur selon l'une des revendications 1 à 8, caractérisé par le fait que les objets entraînés en rotation sont constitués par des ensembles de ventilation mis en oeuvre pour refroidir des modules électriques d'installations électriques.

# FIG 1

# FIG 2

# FIG 3

# FIG 4